# EUROPEAN PATENT SPECIFICATION

(11) **EP 1 913 113 B1**
(45) Date of publication and mention of the grant of the patent: **24.02.2010**
(21) Application number: 06762922.0
(22) Date of filing: 28.07.2006
(51) Int. Cl.: C09K 8/52, C09K 8/62, C09K 8/68

(54) **PROCESS FOR THE REMOVAL OF FILTERCAKES IN OIL WELLS**
VERFAHREN ZUR ENTFERNUNG VON FILTERKUCHEN IN ÖLBOHRLÖCHERN
PROCEDE D'ELIMINATION DES GATEAUX DE FILTRATION DANS DES PUITS DE PETROLE

(30) Priority: 10.08.2005 IT MI20051559
(43) Date of publication of application: 23.04.2008
(73) Proprietor: ENI S.p.A., 00144 Roma (IT); Polimeri Europa S.p.A., 20097 San Donato Milanese (MI) (IT)
(72) Inventor: D'ALOISIO, Rino, I-28100 Novara (IT); BIANCHI, Daniele, I-20020 Arese-Milano (IT); RICCI, Marco, I-28100 Novara (IT); BORTOLO, Rossella, I-28100 Novara (IT); TASSINARI, Roberto, I-28100 Novara (IT); TONINI, Cristina, I-28067 Pernate-Novara (IT); COBIANCO, Sandra, I-24045 Fara Gera d'Adda-Bergamo (IT)
(74) Representative: De Gregori, Antonella
(86) International application number: PCT/EP2006/007596
(87) International publication number: WO 2007/017158

(56) References cited:
- EP-A- 0 559 418
- EP-A- 0 672 740
- US-A- 4 609 475
- US-A- 6 131 661

## Description

The present invention relates to a process for the removal of filtercakes formed in oil wells during drilling operations, by treating said filtercakes with aqueous solutions of particular oxidizing systems, also effective at low temperatures.

Increasing interest has been directed.during the last few years towards the development of new drilling and servicing fluids capable of limiting damage to the productive formations induced by their use. This result is mainly due to the formation of filtercakes on the wall of the well, capable of reducing the inlet in the porous matrix of the fluids and solid used and/or products during the drilling of the well. When the well is put in production, however, the filtercake must be removed in a complete and homogenous manner to obtain high productivity values.

The removal technologies currently available are based on the use of various categories of chemical additives, for example, acids, chelating agents, enzymes, oxidants.

US-A- 4,609,475 describes a method of removing polymeric material from a porous media such as a subterranean formation by contacting the polymeric material with an aqueous composition comprising an oxidizing agent, a water soluble carboxylic acid and optionally a source which is effective in promoting the decomposition of the oxidizing agent

EP-A- 559 418 relates to the decomposition of hydrophilic polysaccharide polymers in aqueous systems, and, more particularly, to a method of breaking down such polymers when they are present in the filter cake deposited from a well working fluid, by oxidizing the hydrophilic polysaccharide polymers with an alkaline earth or transition metal peroxide and mentions that the reactivity of the alkaline earth metal peroxide can be enhanced by the addition of a catalyst to the fluid.

US-A-5,607,905 describes a process for improving the removal of filtercakes by the use of inorganic peroxides as oxidizing agents. More specifically, the process of US-A-5,607,905 envisages the incorporation in the filtercake of peroxides of alkaline earth metals or zinc followed by the subsequent treatment of the above filtercakes with acid solutions.

US-A-5,247,995 describes a method for the removal of filtercakes containing polysaccharides,by treatment with aqueous solutions containing enzymes capable of degrading the polysaccharide or by treatment with an oxidant selected from non-metallic persulfates.

The methods which envisage the removal of filtercakes by the incorporation therein of solid precursors of oxidizing agents, are not entirely reliable as the above solids are not completely insoluble at the operating temperatures. Part of the oxidizing materials are therefore prematurely released with a consequent premature degradation of the polymers. These formulations, moreover, have two further disadvantages, i.e. they can only be used at high pH values and in the absence of significant quantities of reducing agents.

Finally, WO 00/08112 describes a process for the removal of filtercakes based on polysaccharides by treatment of the above filtercakes with saline solutions capable of generating bromine or bromate.

All these solutions to the technical problem of the removal of filtercakes have the drawback of functioning satisfactorily above all in vertical wells, characterized by high pressures and medium-high temperatures.

The necessity has therefore been felt in the art for finding solutions, which are equally if not even more effective, capable of also operating at medium-low temperatures and pressures, particularly in more or less depleted horizontal wells, characterized by medium-low pressures and temperatures.

A process has now been found which satisfies the above demands.

In accordance with this, the present invention relates to a process for the removal of filtercakes from oil wells by solubilisation of polymeric material deposited on a porous medium, which comprises putting the above filtercakes in contact with an aqueous composition, the above aqueous composition comprising:
(a) a catalyst selected from:
   (a1) a complex having general formula (I)

      Fe⁺⁺(L)ₙ(Y)ₛ (I)

      wherein n is an integer selected from 1 to 3,
      Y is independently a group of an anionic nature bound to Fe⁺⁺ as anion in an ionic pair or with a covalent bond of the "σ" type;
      "s" expresses the number of Y groups sufficient for neutralizing the formal oxidation charge of Fe⁺⁺, and is equal to 2 if all the Y groups are monovalent;
      L being a binder selected from those having general formula (II) 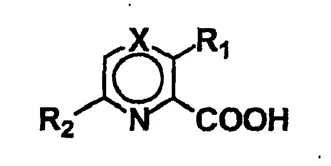 wherein X = CH, N;
      R₁ and R₂, the same or different, are selected from -H, -COOH, and C₁-C₅ alkyl radicals, preferably from H and COOH;
   (a2) a hydrosoluble cobalt²⁺ salt, preferably cobalt acetate;
(b) an oxidizing agent selected from:
   (b1) hydrogen peroxide,
   (b2) MHSO₅, wherein M is an alkaline metal, preferably potassium;
      with the constraint that the catalyst (a1) can only be used in the presence of the oxidizing agent (b1) and the catalyst (a2) can only be used in the presence of the oxidizing agent (b2).

As far as the filtercakes are concerned, typical examples are filtercakes containing polysaccharides, xanthan gum, cellulose.

Typical examples of carboxylic acid binders having general formula (II) are pyridin-2-carboxylic acid, pyrazin-2-carboxylic acid, 2,6-pyridinedicarboxylic acid, 2,3-pyrazinedicarboxylic acid. The preferred compound having general formula (II) is pyridin-2-carboxylic acid.

The complex having general formula (I) can be preformed or, preferably, formed "in situ" by addition of the components, i.e. of the binder L and iron (II) salt. In this latter case, a molar ratio between binder and Fe⁺⁺ ranging from 1/1 to 30/1, preferably from 1/1 to 10/1, can be used.

The oxidizing agent can be fed together with the aqueous solution (I), or subsequently or previously thereto.

When the oxidizing agent is hydrogen peroxide, an aqueous solution thereof at 5% by weight to 40% by weight, preferably from 10% by weight to 30% by weight, can be used.

The aqueous composition of the above invention has a content of Fe⁺⁺ ranging from 0.5 to 10 millimoles/litre, preferably from 1 to 5 millimoles/litre.

Furthermore, when hydrogen peroxide is used, this is present in the final aqueous composition at a concentration ranging from 0.5 to 10% by weight, preferably from 1% to 5% by weight.

When the oxidizing agent is MHSO₅, an aqueous solution thereof, preferably from 5 to 20% by weight, is also used in this case.

The considerable advantage of the process of the present invention lies in the fact that it is also effective at relatively low temperatures, i.e. from 25°C to 60°C.

We would also like to point out that the process of the present invention, allows the initial permeability values to be re-established, as will be shown in the experimental part.

The efficacy of the process of the present invention was first examined under batch conditions, evaluating the time necessary for the reduction in the viscosity of the polymeric solutions or, in the case of amides, for the complete dissolution of the polysaccharide.

The experimental part describes tests effected according to the process of the present invention and comparative tests carried out in the presence of other oxidizing systems.

In particular, the following oxidants were evaluated: H₂O₂, KHSO₅, (NH₄)₂S₂O₈, NaClO, tBuOOH and NaBO₃.

The following catalysts were used: FeSO₄, Co(OAc)₂, Cu(OAc)₂ or their complexes with nitrogenated binders (EDTA, phenanthroline, pyridin-2-carboxylic acid, pyrazin-2-carboxylic acid, 2,5-pyridinedicarboxylic acid, 2,3-pyrazinedicarboxylic acid), selected for their capacity of modifying the redox potential of the metal and for their high stability under oxidizing conditions.

Among all the various systems examined (see experimental part) only those of the present invention proved to be effective.

The effect of various types of brine (KCl 3%, CaCl₂ 25%, CaBr₂ 45%, HCOOK 20%) on the performances of the systems selected, were subsequently evaluated. This study showed that the oxidizing system based on hydrogen peroxide is also effective in the presence of brine.

In order to modulate the activity of the system based on hydrogen peroxide, studies were effected by varying the concentration of the catalyst and temperature. In this way, the degradation time of the polymers can be varied according to the demands. This is undoubtedly another considerable advantage of the present process.

The characterization of the products deriving from the oxidation was effected by ultra-filtration and GPC, revealing the complete disappearance of the polymers and the formation of low molecular weight fragments corresponding to 1-5 units of glucose.

The following examples are provided for a better understanding of the present invention.

### Examples

Table 1 indicates the data relating to the degradation of xanthan gum in the presence of various oxidizing systems, possibly in the presence of catalysts (tests 1-24). The data specified in this table reveals the greater efficacy of the systems of the present invention.

Tables 2 (tests 25-29), 3 (tests 30-36), 4 (tests 37-41) and 5 (tests 42-46) respectively indicate the data of the degradation tests of scleroglucane, succinoglucane and two different starches, in the presence of the systems of the present invention. These tables also indicate various comparative tests.

Table 6 specifies the effect of the concentration of the catalyst on the degradation of scleroglucane with hydrogen peroxide catalyzed by the complex Fe/pyridin-2-carboxylic acid.

Table 7 indicates the effect of the temperature on the degradation rate in the presence of the system of the present invention.

Table 8 describes tests which show the effect of brine on the degradation time in the presence of the system H₂O₂/FeSO₄/PyCOOH.

Finally, tests 60-62 refer to filtercake removal tests.

### Comparative Example 1. Degradation of xanthan gum with hydrogen peroxide

The degradation test was carried out using a solution of N-VIS^{R} (supplied by Baroid), obtained by dissolving 1.2 g of polysaccharide in 200 ml of deionized water by means of a Silverson stirrer.

The initial value of the viscosity proved to be equal to 200, measured using a FANN 35 SA rotational viscometer at 5.1 sec⁻¹ with a rotor-bob R1B1 configuration.

1.2 g of hydrogen peroxide at 30% by weight (10.6 mmoles) were added to the resulting solution and the mixture was then maintained under static conditions at a temperature of 35°C.

The degradation rate was evaluated by measuring the time necessary for reaching a viscosity lower than 10 mPa.s.

Operating under the conditions described above, after 24 hours, the viscosity remained substantially unaltered.

### Comparative Example 2. Degradation of xanthan gum with hydrogen peroxide catalyzed by Fe₂SO₄

The test was carried out under the same conditions described in Example 1, using 1.2 g of hydrogen peroxide at 30% by weight (10.6 mmoles) as oxidizing agent and 0.16 g (0.58 mmoles) of Fe₂SO₄·7H₂O, as catalyst (molar ratio oxidant/catalyst = 18).

Operating under static conditions at 35°C, the time necessary for lowering the viscosity to 10 mPa proved to be equal to 4 hours.

### Comparative Example 3. Degradation of xanthan gum with hydrogen peroxide catalyzed by the complex Fe/EDTA

The test was carried out under the same conditions described in Example 1, using 1.2 g of hydrogen peroxide at 30% by weight (10.6 mmoles) as oxidizing agent and the complex obtained by adding 0.16 g (0.58 mmoles) of Fe₂SO₄• 7H₂O, and 0.51 g (1.74 mmoles) of EDTA (ethylenediaminotetra-acetic acid), as catalyst.

Operating under static conditions at 35°C, the time necessary for lowering the viscosity to 10 mPa proved to be equal to 1 hours.

### Comparative Example 4. Degradation of xanthan gum with hydrogen peroxide catalyzed by the complex Fe/1,10-phenanthroline

The test was carried out under the same conditions described in Example 1, using 1.2 g of hydrogen peroxide at 30% by weight (10.6 mmoles) as oxidizing agent and the complex obtained by adding 0.16 g (0.58 mmoles) of Fe₂SO₄ •7H₂O, and 0.34 g (1.74 mmoles) of 1,10-phenanthroline, as catalyst.

Operating under static conditions at 35°C, the time necessary for lowering the viscosity to 10 mPa proved to be equal to 4 hours.

### Comparative Example 5. Degradation of xanthan gum with hydrogen peroxide catalyzed by the complex Fe/pyridin-2-carboxylic acid

The test was carried out under the same conditions described in Example 1, using 1.2 g of hydrogen peroxide at 30% by weight (10.6 mmoles) as oxidizing agent and the complex obtained by adding 0.16 g (0.58 mmoles) of Fe₂SO₄• 7H₂O, and 0.21 g (1.74 mmoles) of pyridin-2-carboxylic acid, as catalyst.

Operating under static conditions at 35°C, the time necessary for lowering the viscosity to 10 mPa proved to be equal to 3 minutes.

### Comparative Example 6. Degradation of xanthan gum with hydrogen peroxide catalyzed by the complex Fe/pyrazinecarboxylic acid

The test was carried out under the same conditions described in Example 1, using 1.2 g of hydrogen peroxide at 30% by weight (10.6 mmoles) as oxidizing agent and the complex obtained by adding 0.16 g (0.58 mmoles) of Fe₂SO₄ •7H₂O, and 0.22 g (1.74 mmoles) of pyrazinecarboxylic acid, as catalyst.

Operating under static conditions at 35°C, the time necessary for lowering the viscosity to 10 mPa proved to be equal to 10 minutes.

### Comparative Example 7. Degradation of xanthan gum with hydrogen peroxide catalyzed by the complex Fe/2,6-pyridinedicarboxylic acid

The test was carried out under the same conditions described in Example 1, using 1.2 g of hydrogen peroxide at 30% by weight (10.6 mmoles) as oxidizing agent and the complex obtained by adding 0.16 g (0.58 mmoles) of Fe₂SO₄• 7H₂O, and 0.29 g (1.74 mmoles) of 2,6pyridinedicarboxylic acid, as catalyst.

Operating under static conditions at 35°C, the time necessary for lowering the viscosity to 10 mPa proved to be equal to 10 minutes.

### Comparative Example 8. Degradation of xanthan gum with hydrogen peroxide catalyzed by the complex Fe/2,3-pyrazinedicarboxylic acid

The test was carried out under the same conditions described in Example 1, using 1.2 g of hydrogen peroxide at 30% by weight (10.6 mmoles) as oxidizing agent and the complex obtained by adding 0.16 g (0.58 mmoles) of Fe₂SO₄• 7H₂O, and 0.29 g (1.74 mmoles) of 2,3-pyrazinedicarboxylic acid, as catalyst.

Operating under static conditions at 35°C, the time necessary for lowering the viscosity to 10 mPa proved to be equal to 3 minutes.

### Comparative Example 9. Degradation of xanthan gum with potassium monopersulfate

The test was carried out under the same conditions described in Example 1, using 3.2 g of potassium monopersulfate (KHSO₅) at 47% by weight (9.9 mmoles) as oxidizing agent, in the absence of a catalyst.

Operating under static conditions at 35°C, after 24 hours, the viscosity remained substantially unaltered.

### Comparative Example 10. Degradation of xanthan gum with potassium monopersulfate catalyzed by Fe₂SO₄.

The test was carried out under the same conditions described in Example 1, using 3.2 g of potassium monopersulfate (KHSO₅) at 47% by weight (9.9 mmoles) as oxidizing agent and 0.16 g (0.58 mmoles) of Fe₂SO₄• 7H₂O, as catalyst.

Operating under static conditions at 35°C, the time necessary for lowering the viscosity to 10 mPa proved to be equal to 16 hours.

### Comparative Example 11. Degradation of xanthan gum with potassium monopersulfate catalyzed by the complex Fe/pyridin-2-carboxylic acid

The test was carried out under the same conditions described in Example 1, using 3.2 g of potassium monopersulfate (KHSO₅) at 47% by weight (9.9 mmoles) as oxidizing agent and the complex obtained by adding 0.16 g (0.58 mmoles) of Fe₂SO₄•7H₂O, and 0.21 g (1.74 mmoles) of pyridin-2-carboxylic acid, as catalyst.

Operating under static conditions at 35°C, the time necessary for lowering the viscosity to 10 mPa proved to be equal to 8 minutes.

### Comparative Example 12. Degradation of xanthan gum with potassium monopersulfate catalyzed by the complex Fe/pyrazinecarboxylic acid

The test was carried out under the same conditions described in Example 1, using 3.2 g of potassium monopersulfate (KHSO₅) at 47% by weight (9.9 mmoles) as oxidizing agent and the complex obtained by adding 0.16 g (0.58. mmoles) of Fe₂SO₄•7H₂O, and 0.21 g (1.74 mmoles) of pyrazinecarboxylic acid, as catalyst.

Operating under static conditions at 35°C, the time necessary for lowering the viscosity to 10 mPa proved to be equal to 4 hours.

### Comparative Example 13. Degradation of xanthan gum with ammonium peroxydisulfate

The test was carried out under the same conditions described in Example 1, using 2.3 g of ammonium peroxydisulfate [(NH₄)₂S₂O₈] (10.1 mmoles) as oxidizing agent in the absence of a catalyst.

Operating under static conditions at 35°C, the time necessary for lowering the viscosity to 10 mPa proved to be equal to 12 hours.

### Comparative Example 14. Degradation of xanthan gum with ammonium peroxydisulfate catalyzed by Fe₂SO₄

The test was carried out under the same conditions described in Example 1, using 2.3 g of ammonium peroxydisulfate [(NH₄)₂S₂O₈] (10.1 mmoles) as oxidizing agent and 0.16 g (0.58 mmoles) of Fe₂SO₄•7H₂O, as catalyst.

Operating under static conditions at 35°C, the time necessary for lowering the viscosity to 10 mPa proved to be equal to 2 hours.

### Comparative Example 15. Degradation of xanthan gum with ammonium peroxydisulfate catalyzed by the complex Fe/pyridin-2-carboxylic acid

The test was carried out under the same conditions described in Example 1, using 2.3 g of ammonium peroxydisulfate [(NH₄)₂S₂O₈] (10.1 mmoles) as oxidizing agent and the complex obtained by adding 0.16 g (0.58 mmoles) of Fe₂SO₄• 7H₂O and 0.21 g (1.74 mmoles) of pyridin-2-carboxylic acid, as catalyst.

Operating under static conditions at 35°C, the time necessary for lowering the viscosity to 10 mPa proved to be equal to 4 hours.

### Comparative Example 16. Degradation of xanthan gum with ammonium peroxydisulfate catalyzed by the complex Fe/pyrazinecarboxylic acid

The test was carried out under the same conditions described in Example 1, using 2.3 g of ammonium peroxydisulfate [(NH₄)₂S₂O₈] (10.1 mmoles) as oxidizing agent and the complex obtained by adding 0.16 g (0.58 mmoles) of Fe₂SO₄• 7H₂O and 0.22 g (1.74 mmoles) of pyrazinecarboxylic acid, as catalyst.

Operating under static conditions at 35°C, the time necessary for lowering the viscosity to 10 mPa proved to be equal to 2 hours.

### Comparative Example 17. Degradation of xanthan gum with hydrogen peroxide catalyzed by Co(CH₃COO)₂

The test was carried out under the same conditions described in Example 1, using 1.2 g of hydrogen peroxide at 30% by weight (10.6 mmoles) as oxidizing agent and 0.15 g (0.60 mmoles) of Co(CH₃COO)₂.4H₂O as catalyst.

Operating under static conditions at 35°C, the time necessary for lowering the viscosity to 10 mPa proved to be equal to 10 hours.

### Comparative Example 18. Degradation of xanthan gum with hydrogen peroxide catalyzed by the complex Co/pyridin-2-carboxylic acid

The test was carried out under the same conditions described in Example 1, using 1.2 g of hydrogen peroxide at 30% by weight (10.6 mmoles) as oxidizing agent and the complex obtained by adding 0.15 g (0.60 mmoles) of Co(CH₃COO)₂.4H₂O and 0.21 g (1.74 mmoles) of pyridin-2-carboxylic acid as catalyst.

Operating under static conditions at 35°C, after 24 hours the viscosity remained substantially unaltered.

### Comparative Example 19. Degradation of xanthan gum with potassium monopersulfate catalyzed by Co(CH₃COO)₂

The test was carried out under the same conditions described in Example 1, using 3.2 g of potassium monopersulfate (KHSO₅) at 47% by weight (9.9 mmoles) as oxidizing agent and 0.15 g (0.60 mmoles) of Co(CH₃COO)₂.4H₂O as catalyst. Operating under static conditions at 35°C, the time necessary for lowering the viscosity to 10 mPa proved to be equal to 3 minutes.

### Comparative Example 20. Degradation of xanthan gum with potassium monopersulfate catalyzed by the complex Co/pyridin-2-carboxylic acid

The test was carried out under the same conditions described in Example 1, using 3.2 g of potassium monopersulfate (KHSO₅) at 47% by weight (9.9 mmoles) as oxidizing agent and 0.15 g (0.60 mmoles) of Co(CH₃COO)₂.4H₂O and 0.21 g (1.74 mmoles) of pyridin-2-carboxylic acid, as catalyst. Operating under static conditions at 35°C, the time necessary for lowering the viscosity to 10 mPa proved to be equal to 7 hours.

### Comparative Example 21. Degradation of xanthan gum with hydrogen peroxide catalyzed by Cu(CH₃COO)₂

The test was carried out under the same conditions described in Example 1, using 1.2 g of hydrogen peroxide at 30% by weight (10.6 mmoles) as oxidizing agent and 0.12 g (0.60 mmoles) of Cu(CH₃COO)₂.H₂O as catalyst.

Operating under static conditions at 35°C, the time necessary for lowering the viscosity to 10 mPa proved to be equal to 30 minutes.

### Comparative Example 22. Degradation of xanthan gum with hydrogen peroxide catalyzed by the complex Cu/pyridin-2-carboxylic acid

The test was carried out under the same conditions described in Example 1, using 1.2 g of hydrogen peroxide at 30% by weight (10.6 mmoles) as oxidizing agent and the complex obtained by adding 0.12 g (0.60 mmoles) of Cu(CH₃COO)₂.H₂O and 0.21 g (1.74 mmoles) of pyridin-2-carboxylic acid as catalyst.

Operating under static conditions at 35°C, after 24 hours the viscosity remained substantially unaltered.

### Comparative Example 23. Degradation of xanthan gum with potassium monopersulfate catalyzed by Cu(CH₃COO)₂

The test was carried out under the same conditions described in Example 1, using 3.2 g of potassium monopersulfate (KHSO₅) at 47% by weight (9.9 mmoles) as oxidizing agent and 0.12 g (0.60 mmoles) of Cu(CH₃COO)₂.H₂O as catalyst.

Operating under static conditions at 35°C, after 24 hours the viscosity remained substantially unaltered.

### Comparative Example 24. Degradation of xanthan gum with potassium monopersulfate catalyzed by the complex Cu/pyridin-2-carboxylic acid

The test was carried out under the same conditions described in Example 1, using 3.2 g of potassium monopersulfate (KHSO₅) at 47% by weight (9.9 mmoles) as oxidizing agent and 0.12 g (0.60 moles) of Cu(CH₃COO)₂.H₂O and 0.22 g (1.74 mmoles) of pyridin-2-carboxylic acid, as catalyst.

Operating under static conditions at 35°C, after 24 hours the viscosity remained substantially unaltered.

### Comparative Example 25. Degradation of scleroglucane with hydrogen peroxide

The degradation test was carried out using a solution of BIOVIS (supplied by SKW Trostberg), obtained by dissolving 1.2 g of polysaccharide in 200 ml of deionized water by means of a Silverson stirrer.

The initial viscosity value proved to be equal to 200, measured using a FANN 35 SA rotational viscometer at 5.5 sec⁻¹ with a rotor-bob R1B1 configuration.

1.2 g of hydrogen peroxide at 30% by weight (10.6 mmoles) were added to the resulting solution and the mixture was then maintained under static conditions at a temperature of 35°C.

The degradation rate was evaluated by measuring the time necessary for reaching a viscosity lower than 10 mPa.s.

Operating under the conditions described above, after 24 hours, the viscosity remained substantially unaltered.

### Example 26. Degradation of scleroglucane with hydrogen peroxide catalyzed by the complex Fe/pyridin-2-carboxylic acid

The test was carried out under the same conditions described in Example 25, using 1.2 g of hydrogen peroxide at 30% by weight (10.6 mmoles) as oxidizing agent and the complex obtained by adding 0.16 g (0.58 mmoles) of Fe₂SO₄• 7H₂O, and 0.21 g (1.74 mmoles) of pyridin-2-carboxylic acid, as catalyst (molar ratio oxidizing agent/catalyst = 18).

Operating under static conditions at 35°C, the time necessary for lowering the viscosity to 10 mPa proved to be equal to 20 minutes.

### Comparative Example 27. Degradation of scleroglucane with potassium monopersulfate

The test was carried out under the same conditions described in Example 25, using 3.2 g of potassium monopersulfate (KHSO₅) at 47% by weight (9.9 mmoles) as oxidizing agent without a catalyst.

Operating under static conditions at 35°C, after 24 hours the viscosity remained substantially unaltered.

### Comparative Example 28. Degradation of scleroglucane with potassium monopersulfate catalyzed by the complex Fe/pyridin-2-carboxylic acid

The test was carried out under the same conditions described in Example 25, using 3.2 g of potassium monopersulfate (KHSO₅) at 47% by weight (9.9 mmoles) as oxidizing agent and the complex obtained by adding 0.16 g (0.58 mmoles) of Fe₂SO₄•7H₂O and 0.21 g (1.74 mmoles) of pyridin-2-carboxylic acid, as catalyst.

Operating under static conditions at 35°C, the time necessary for lowering the viscosity to 10 mPa proved to be equal to 1 hour.

### Comparative Example 29. Degradation of scleroglucane with potassium monoporsulfate catalyzed by Co(CH₃COO)₂

The test was carried out under the same conditions described in Example 25, using 3.2 g of potassium monopersulfate (KHSO₅) at 47% by weight (9.9 mmoles) as oxidizing agent and 0.15 g (0.60 mmoles) of Co(CH₃COO)₂.4H₂O as catalyst.

Operating under static conditions at 35°C, the time necessary for lowering the viscosity to 10 mPa proved to be equal to 15 minutes.

### Comparative Example 30. Degradation of succinoglucane with hydrogen peroxide

The degradation test was carried out using a solution of FLOPAC^{R} (supplied by Halliburton), obtained by dissolving 6.0 g of polysaccharide in 200 ml of deionized water by means of a Silverson stirrer.

The initial viscosity value proved to be equal to 450, measured using a FANN 35 SA rotational viscometer at 5.5 sec⁻¹ with a rotor-bob R1B1 configuration.

1.2 g of hydrogen peroxide at 30% by weight (10.6 mmoles) were added to the resulting solution and the mixture was then maintained under static conditions at a temperature of 35°C.

The degradation rate was evaluated by measuring the time necessary for reaching a viscosity lower than 10 mPa.s. Operating under the conditions described above, after 24 hours, the viscosity remained substantially unaltered.

### Example 31. Degradation of succinoglucane with hydrogen peroxide catalyzed by the complex Fe/pyridin-2-carboxylic acid

The test was carried out under the same conditions described in Example 30, using 1.2 g of hydrogen peroxide at 30% by weight (10.6 mmoles) as oxidizing agent and the complex obtained by adding 0.16 g (0.58 mmoles) of Fe₂SO₄•7H₂O, and 0.21 g (1.74 mmoles) of pyridin-2-carboxylic acid, as catalyst.

Operating under static conditions at 35°C, the time necessary for lowering the viscosity to 10 mPa proved to be equal to 10 minutes.

### Comparative Example 32. Degradation of succinoglucane with potassium monopersulfate

The test was carried out under the same conditions described in Example 30, using 3.2 g of potassium monopersulfate (KHSO₅) at 47% by weight (9.9 mmoles) as oxidizing agent without a catalyst.

Operating under static conditions at 35°C, after 24 hours the viscosity remained substantially unaltered.

### Comparative Example 33. Degradation of succinoglucane with potassium monopersulfate catalyzed by the complex Fe/pyridin-2-carboxylic acid

The test was carried out under the same conditions described in Example 30, using 3.2 g of potassium monopersulfate (KHSO₅) at 47% by weight (9.9 mmoles) as oxidizing agent and the complex obtained by adding 0.16 g (0.58 mmoles) of Fe₂SO₄•7H₂O and 0.21 g (1.74 mmoles) of pyridin-2-carboxylic acid, as catalyst.

Operating under static conditions at 35°C, the time necessary for lowering the viscosity to 10 mPa proved to be equal to 2 hours.

### Comparative Example 34. Degradation of succinoglucane with potassium monopersulfate catalyzed by Co(CH₃COO)₂

The test was carried out under the same conditions described in Example 30, using 3.2 g of potassium monopersulfate (KHSO₅) at 47% by weight (9.9 mmoles) as oxidizing agent and 0.15 g (0.60 mmoles) of Co(CH₃COO)₂.4H₂O as catalyst.

Operating under static conditions at 35°C, the time necessary for lowering the viscosity to 10 mPa proved to be equal to 10 minutes.

### Comparative Example 35. Degradation of succinoglucane with ammonium peroxydisulfate

The test was carried out under the same conditions described in Example 1, using 2.3 g of ammonium peroxydisulfate [(NH₄)₂S₂O₈] (10.1 mmoles) as oxidizing agent in the absence of a catalyst.

Operating under static conditions at 35°C, the time necessary for lowering the viscosity to 10 mPa proved to be equal to 14 hours.

### Comparative Example 36. Degradation of succinoglucane with ammonium peroxydisulfate catalyzed by Fe₂SO₄

The test was carried out under the same conditions described in Example 1, using 2.3 g of ammonium peroxydisulfate [(NH₄)₂S₂O₈] (10.1 mmoles) as oxidizing agent and 0.16 g (0.58 mmoles) of Fe₂SO₄•7H₂O, as catalyst.

Operating under static conditions at 35°C, the time necessary for lowering the viscosity to 10 mPa proved to be equal to 1 hour.

### -Comparative Example 37. Degradation of starch with hydrogen peroxide

The degradation test was carried out using a suspension of FLOTROL^{R} (supplied by MI), obtained by adding 2 g of polysaccharide to 200 ml of deionized water.

1.2 g of hydrogen peroxide at 30% by weight (10.6 mmoles) were added to the resulting mixture which was then maintained under bland stirring at a temperature of 35°C.

The degradation rate was evaluated by measuring the time necessary for the complete dissolution of the polysaccharide.

Operating under the conditions described above, after 24 hours, the suspension remained substantially unaltered.

### Example 38. Degradation of starch with hydrogen peroxide catalyzed by the complex Fe/pyridin-2-carboxylic acid

The test was carried out under the same conditions described in Example 37, using 1.2 g of hydrogen peroxide at 30% by weight (10.6 mmoles) as oxidizing agent and the complex obtained by adding 0.16 g (0.58 mmoles) of Fe₂SO₄•7H₂O, and 0.21 g (1.74 mmoles) of pyridin-2-carboxylic acid, as catalyst.

Operating under the conditions described above, at 35°C, the time necessary for the complete dissolution of the polysaccharide proved to be equal to 50 minutes.

### Comparative Example 39. Degradation of starch with potassium monopersulfate

The test was carried out under the same conditions described in Example 37, using 3.2 g of potassium monopersulfate (KHSO₅) at 47% by weight (9.9 mmoles) as oxidizing agent without a catalyst.

Operating under the conditions described above, after 24 hours the suspension remained substantially unaltered.

### Comparative Example 40. Degradation of starch with potassium monopersulfate catalyzed by the complex Fe/pyridin-2-carboxylic acid

The test was carried out under the same conditions described in Example 37, using 3.2 g of potassium monopersulfate (KHSO₅) at 47% by weight (9.9 mmoles) as oxidizing agent and the complex obtained by adding 0.16 g (0.58 mmoles) of Fe₂SO₄•7H₂O and 0.21 g (1.74 mmoles) of pyridin-2-carboxylic acid, as catalyst. Operating under the conditions described above, at 35°C, the time necessary for the complete dissolution of the polysaccharide proved to be equal to 3 hours.

### Comparative Example 41. Degradation of starch with potassium monopersulfate catalyzed by Co(CH₃COO)₂

The test was carried out under the same conditions described in Example 37, using 3.2 g of potassium monopersulfate (KHSO₅) at 47% by weight (9.9 mmoles) as oxidizing agent and 0.15 g (0.60 mmoles) of Co(CH₃COO)₂.4H₂O as catalyst.

Operating under the conditions described above, at 35°C, the time necessary for the complete dissolution of the polysaccharide proved to be equal to 25 minutes.

### Comparative Example 42. Degradation of starch with hydrogen peroxide

The degradation test was carried out using a suspension of DUALFLO^{R} (supplied by MI), obtained by adding 2 g of polysaccharide to 200 ml of deionized water.

1.2 g of hydrogen peroxide at 30% by weight (10.6 mmoles) were added to the resulting mixture which was then maintained under bland stirring at a temperature of 35°C.

The degradation rate was evaluated by measuring the time necessary for the complete dissolution of the polysaccharide.

Operating under the conditions described above, after 24 hours, the suspension remained substantially unaltered.

### Example 43. Degradation of starch with hydrogen peroxide catalyzed by the complex Fe/pyridin-2-carboxylic acid

The test was carried out under the same conditions described in Example 42, using 1.2 g of hydrogen peroxide at 30% by weight (10.6 mmoles) as oxidizing agent and the complex obtained by adding 0.16 g (0.58 mmoles) of Fe₂SO₄•7H₂O, and 0.21 g (1.74 mmoles) of pyridin-2-carboxylic acid, as catalyst.

Operating under the conditions described above, at 35°C, the time necessary for the complete dissolution of the polysaccharide proved to be equal to 40 minutes.

### Comparative Example 44. Degradation of starch with potassium monopersulfate

The test was carried out under the same conditions described in Example 42, using 3.2 g of potassium monopersulfate (KHSO₅) at 47% by weight (9.9 mmoles) as oxidizing agent without a catalyst.

Operating under the conditions described above, after 24 hours the suspension remained substantially unaltered.

### Comparative Example 45. Degradation of starch with potassium monopersulfate catalyzed by the complex Fe/pyridin-2-carboxylic acid

The test was carried out under the same conditions described in Example 42, using 3.2 g of potassium monopersulfate (KHSO₅) at 47% by weight (9.9 mmoles) as oxidizing agent and the complex obtained by adding 0.16 g (0.58 mmoles) of Fe₂SO₄•7H₂O and 0.21 g (1.74 mmoles) of pyridin-2-carboxylic acid, as catalyst.

Operating under the conditions described above, at 35°C, the time necessary for the complete dissolution of the polysaccharide proved to be equal to 1 hour.

### Comparative Example 46. Degradation of starch with potassium monopersulfate catalyzed by Co(CH₃COO)₂

The test was carried out under the same conditions described in Example 42, using 3.2 g of potassium monopersulfate (KHSO₅) at 47% by weight (9.9 mmoles) as oxidizing agent and 0.15 g (0.60 mmoles) of Co(CH₃COO)₂.4H₂O as catalyst.

Operating under the conditions described above, at 35°C, the time necessary for the complete dissolution of the polysaccharide proved to be equal to 20 minutes.

### Example 47. Degradation of scleroglucane with hydrogen peroxide catalyzed by the complex Fe/pyridin-2-carboxylic acid: effect of the catalyst concentration

The test was carried out under the same conditions described in Example 26, using 1.2 g of hydrogen peroxide at 30% by weight (10.6 mmoles) as oxidizing agent and the complex obtained by adding 64 mg (0.23 mmoles) of Fe₂SO₄•7H₂O, and 84 mg (0.69 mmoles) of pyridin-2-carboxylic acid, as catalyst (molar ratio oxidizing agent/catalyst = 46).

Operating under static conditions at 35°C, the time necessary for lowering the viscosity to 10 mPa proved to be equal to 30 minutes.

### Example 48. Degradation of scleroglucane with hydrogen peroxide catalyzed by the complex Fe/pyridin-2-carboxylic acid: effect of the catalyst concentration

The test was carried out under the same conditions described in Example 26, using 1.2 g of hydrogen peroxide at 30% by weight (10.6 mmoles) as oxidizing agent and the complex obtained by adding 32 mg (0.12 mmoles) of Fe₂SO₄•7H₂O, and 44 mg (.0.36 mmoles) of pyridin-2-carboxylic acid, as catalyst (molar ratio oxidizing agent/catalyst = 88).

Operating under static conditions at 35°C, the time necessary for lowering the viscosity to 10 mPa proved to be equal to 4 hours.

### Example 49. Degradation of scleroglucane with hydrogen peroxide catalyzed by the complex Fe/pyridin-2-carboxylic acid: effect of the catalyst concentration

The test was carried out under the same conditions described in Example 26, using 1.2 g of hydrogen peroxide at 30% by weight (10.6 mmoles) as oxidizing agent and the complex obtained by adding 16 mg (0.06 mmoles) of Fe₂SO₄•7H₂O, and 22 mg (0.18 mmoles) of pyridin-2-carboxylic acid, as catalyst (molar ratio oxidizing agent/catalyst = 177).

Operating under static conditions at 35°C, the time necessary for lowering the viscosity to 10 mPa proved to be equal to 18 hours.

### Example 50. Degradation of scleroglucane with hydrogen peroxide catalyzed by the complex Fe/pyridin-2-carboxylic acid: temperature effect

The test was carried out under the same conditions described in Example 26.

Operating under static conditions at 25°C, the time necessary for lowering the viscosity to 10 mPa proved to be equal to 90 minutes.

### Example 51. Degradation of scleroglucane with hydrogen peroxide catalyzed by the complex Fe/pyridin-2-carboxylic acid: temperature effect

The test was carried out under the same conditions described in Example 26.

Operating under static conditions at 50°C, the time necessary for lowering the viscosity to 10 mPa proved to be equal to 10 minutes.

### Example 52. Degradation of scleroglucane with potassium monopersulfate catalyzed by Co(CH₃COO)₂: temperature effect

The test was carried out under the same conditions described in Example 29.

Operating under static conditions at 25°C, the time necessary for lowering the viscosity to 10 mPa proved to be equal to 60 minutes.

### Example 53. Degradation of scleroglucane with potassium monopersulfate catalyzed by Co(CH₃COO)₂: temperature effect

The test was carried out under the same conditions described in Example 29.

Operating under static conditions at 50°C, the time necessary for lowering the viscosity to 10 mPa proved to be equal to 8 minutes.

### Example 54. Degradation of starch with hydrogen peroxide catalyzed by the complex Fe/pyridin-2-carboxylic acid: temperature effect

The test was carried out under the same conditions described in Example 38.

Operating under static conditions at 25°C, the time necessary for lowering the viscosity to 10 mPa proved to be equal to 75 minutes.

### Example 55. Degradation of starch with hydrogen peroxide catalyzed by the complex Fe/pyridin-2-carboxylic acid: temperature effect

The test was carried out under the same conditions described in Example 38.

Operating under static conditions at 50°C, the time necessary for lowering the viscosity to 10 mPa proved to be equal to 6 minutes.

### Example 56. Degradation of scleroglucane with hydrogen peroxide catalyzed by the complex Fe/pyridin-2-carboxylic acid: brine (KCl) effect

The test was carried out under the same conditions described in Example 26 by dissolving polysaccharide in 200 ml of an aqueous solution of KCl at 3% by weight.

Operating under static conditions at 35°C, the time necessary for lowering the viscosity to 10 mPa proved to be equal to 25 minutes.

### Example 57. Degradation of scleroglucane with hydrogen peroxide catalyzed by the complex Fe/pyridin-2-carboxylic acid: brine (CaCl₂) effect

The test was carried out under the same conditions described in Example 26 by dissolving polysaccharide in 200 ml of an aqueous solution of CaCl₂ at 25% by weight.

Operating under static conditions at 35°C, the time necessary for lowering the viscosity to 10 mPa proved to be equal to 25 minutes.

### Example 58. Degradation of scleroglucane with hydrogen peroxide catalyzed by the complex Fe/pyridin-2-carboxylic acid: brine (CaBr₂) effect

The test was carried out under the same conditions described in Example 26 by dissolving polysaccharide in 200 ml of an aqueous solution of CaBr₂ at 45% by weight.

Operating under the conditions described above, after 24 hours, the suspension remained substantially unaltered.

The decomposition of the CaBr₂ was verified, with the formation of Br₂.

### Example 59. Degradation of scleroglucane with hydrogen peroxide catalyzed by the complex Fe/pyridin-2-carboxylic acid: brine (HCOOK) effect

The test was carried out under the same conditions described in Example 26 by dissolving polysaccharide in 200 ml of an aqueous solution of potassium formiate at 20% by weight.

Operating under the conditions described above, after 24 hours, the suspension remained substantially unaltered.

The decomposition of the potassium formiate was verified with the formation of CO₂.

### Example 60. Removal of the filtercake

The initial permeability of a ceramic filter (diameter: 2.5", thickness: 0.25", porosity: 5 microns) was determined using a HTHP dynamic filterpress, measuring the time necessary for the passage of 200 ml of an aqueous solution of KCl at 3%, at a pressure of 7 bars, at 40°C.

The cell was then filled with a fluid having the following composition:

| | |
|---|---|
| Water | 350 ml |
| KCl | 10.5 g |
| BIOVIS^{R} (Scleroglucane) | 1.75 g |
| DUALFLO^{R} (starch) | 7.0 g |
| CaCO₃ | 35 g |

The formation of the filtercake was obtained by pressurizing the cell at a pressure of 21 bars, under stirring (600 rpm) for 30 minutes. After a washing with water, the removal of the filtercake was effected by adding, to the cell, a breaker solution having the following composition:

| | |
|---|---|
| Water | 350 ml |
| KCl | 10.5 g |
| Hydrogen peroxide (pure) | 5.25 g |
| FeSO₄ | 100 mg |
| Pyridin-2-carboxylic acid | 110 mg |

The solution was kept under static conditions for 4 hours at 40°C.

After washing with water, the residual permeability was determined by measuring the time necessary for the passage of 200 ml of aqueous solution of KCl at 3% at a pressure of 7 bars at 40°C.
The following results were obtained:
Initial permeability: 20 sec/200 ml
Final permeability: 20 sec/200 ml
Permeability recovery: 100%

### Example 61. Removal of the filtercake

The test was carried out under the same conditions described in Example 60, using however the following fluid for the formation of the filtercake:

| | |
|---|---|
| Water | 350 ml |
| KCl | 10.5 g |
| N-VIS^{R} (Xanthum gum) | 1.75 g |
| DUALFLO^{R} (starch) | 7.0 g |
| CaCO₃ | 35 g |

After treatment with the breaker solution, the following results were obtained:
Initial permeability: 20 sec/200 ml
Final permeability: 20 sec/200 ml
Permeability recovery: 100%

### Example 62. Removal of the filtercake

The test was carried out under the same conditions described in Example 60, using however the following fluid for the formation of the filtercake:

| | |
|---|---|
| Water | 350 ml |
| KCl | 10.5 g |
| BIOVIS^{R} (Scleroglucane) | 1.75 g |
| FLOTROL^{R} (starch) | 7.0 g |
| CaCO₃ | 35 g |

After treatment with the breaker solution, the following results were obtained:
Initial permeability: 20 sec/200 ml
Final permeability: 20 sec/200 ml
Permeability recovery: 100%

**Table 1. Degradation of xanthan gum (N-VIS)**

| **Ex.** | **Oxidizing agent** | **Catalyst** | **Binder** | **Degradation time** |
|---|---|---|---|---|
| 1c | H₂O₂ | - - - | - - - | > 24 hours |
| 2c | H₂O₂ | FeSO₄ | - - - | 4 hours |
| 3c | H₂O₂ | FeSO₄ | Phen | 4 hours |
| 4 | H₂O₂ | FeSO₄ | EDTA | 1 hour |
| 5 | H₂O₂ | FeSO₄ | PyCOOH | 3 minutes |
| 6 | H₂O₂ | FeSO₄ | PyrCOOH | 10 minutes |
| 7 | H₂O₂ | FeSO₄ | Py(COOH)₂ | 10 minutes |
| 8 | H₂O₂ | FeSO₄ | Pyr(COOH)₂ | 3 minutes |
| 9c | (NH₄)₂S₂O₈ | - - - | - - - | 12 hours |
| 10c | (NH₄)₂S₂O₈ | FeSO₄ | - - - | 2 hours |
| 11c | (NH₄)₂S₂O₈ | FeSO₄ | PyCOOH | 4 hours |
| 12c | (NH₄)₂S₂O₈ | FeSO₄ | PyrCOOH | 2 hours |
| 13c | KHSO₅ | - - - | - - - | > 24 hours |
| 14c | KHSO₅ | FeSO₄ | - - - | 16 hours |
| 15c | KHSO₅ | FeSO₄ | PyCOOH | 8 minutes |
| 16c | KHSO₅ | FeSO₄ | PyrCOOH | 4 hours |
| 17c | H₂O₂ | Co(OAc)₂ | - - - | 10 hours |
| 18c | H₂O₂ | Co(OAc)₂ | PyCOOH | > 24 hours |
| 19c | KHSO₅ | Co(OAC)₂ | | 3 minutes |
| 20c | KHSO₅ | Co(OAc)₂ | PyCOOH | 9 hours |
| 21c | H₂O₂ | Cu(OAc)₂ | | 30 minutes |
| 22c | H₂O₂ | Cu(OAc)₂ | PyCOOH | >24 hours |
| 23c | KHSO₅ | Cu(OAc)₂ | | >24 hours |
| 24c | KHSO₅ | Cu(OAc)₂ | PyCOOH | >24 hours |

| | | | | |
|---|---|---|---|---|
| **Abbreviations:** EDTA (ethylenediaminotetra-acetic acid) Phen (1,10-phenalthroline) PyCOOH (pyridin-2-carboxylic acid) PyrCOOH (pyrazine-carboxylic acid) Py(COOH)₂ (pyridin-2,6-dicarboxylic acid) Pyr(COOH)₂ (pyrazine-2,3-dicarboxylic acid) | | | | |

**Table 2. Degradation of scleroglucane (BIOVIS)**

| **Ex.** | **Oxidizing agent** | **Catalyst** | **Binder** | **Degradation time** |
|---|---|---|---|---|
| 25c | H₂O₂ | - - - | - - - | > 24 hours |
| 26 | H₂O₂ | FeSO₄ | PyCOOH | 20 minutes |
| 27c | KHSO₅ | - - - | - - - | > 24 hours |
| 28c | KHSO₅ | FeSO₄ | PyCOOH | 1 hour- |
| 29 | KHSO₅ | Co(OAc)₂ | - - - | 15 minutes |

**Table 3. Degradation of succinoglucane (FLOPAC)**

| **Ex.** | **Oxidizing agent** | **Catalyst** | **Binder** | **Degradation time** |
|---|---|---|---|---|
| 30c | H₂O₂ | - - - | - - - | > 24 hours |
| 31 | H₂O₂ | FeSO₄ | PyCOOH | 10 minutes |
| 32c | KHSO₅ | - - - | - - - | > 24 hours |
| 33c | KHSO₅ | FeSO₄ | PyCOOH | 2 hour |
| 34 | KHSO₅ | Co(OAc)₂ | - - - | 10 minutes |
| 35c | (NH₄)₂S₂O₈ | - - - | - - - | 14 hours |
| 36c | (NH₄)₂S₂O₈ | FeSO₄ | - - - | 1 hour |

**Table 4. Degradation of starch (FLOTROL)**

| **Ex.** | **Oxidizing agent** | **Catalyst** | **Binder** | **Degradation time** |
|---|---|---|---|---|
| 37c | H₂O₂ | - - - | - - - | > 24 hours |
| 38 | H₂O₂ | FeSO₄ | PyCOOH | 50 minutes |
| 39c | KHSO₅ | - - - | - - - | > 24 hours |
| 40c | KHSO₅ | FeSO₄ | PyCOOH | 3 hours |
| 41 | KHSO₅ | Co(OAc)₂ | - - - | 25 minutes |

**Table 5. Degradation of starch (DUALFLO)**

| **Ex.** | **Oxidizing agent** | **Catalyst** | **Binder** | **Degradation time** |
|---|---|---|---|---|
| 42c | H₂O₂ | - - - | - - - | > 24 hours |
| 43 | H₂O₂ | FeSO₄ | PyCOOH | 40 minutes |
| 44c | KHSO₅ | - - - | - - - | > 24 hours |
| 45c | KHSO₅ | FeSO₄ | PyCOOH | 1 hours |
| 46 | KHSO₅ | Co(OAc)₂ | - - - | 20 minutes |

**Table 6. Degradation of scleroglucane (BIOVIS) with hydrogen peroxide catalysed by the complex Fe/pyridin-2-carboxylic acid: effect of the catalyst concentration.**

| **Ex.** | **Substrate** | **Oxidazing agent/Catalyst/Binder** | **Molar ratio Oxidazing agent/Catalyst** | **Degradation time** |
|---|---|---|---|---|
| 26 | BIOVIS | H₂O₂/FeSO₄PyCOOH | 18 | 20 minutes |
| 47 | BIOVIS | H₂O₂/FeSO₄PyCOOH | 46 | 30 minutes |
| 48 | BIOVIS | H₂O₂/FeSO₄PyCOOH | 88 | 4 hours |
| 49 | BIOVIS | H₂O₂/FeSO₄PyCOOH | 177 | 18 hours |

**Table 7. Effect of temperature**

| **Ex.** | **Substrate** | **Oxidazing agent/Catalyst/Binder** | **Temperature (°C)** | **Degradation time** |
|---|---|---|---|---|
| 26 | BIOVIS | H₂O₂/FeSO₄PyCOOH | 35 | 20 minutes |
| 50 | BIOVIS | H₂O₂/FeSO₄PyCOOH | 25 | 90 minutes |
| 51 | BIOVIS | H₂O₂/FeSO₄PyCOOH | 50 | 10 minutes |
| 29 | BIOVIS | KHSO₅/Co(OAc)₂/ - | 35 | 15 minutes |
| 52 | BIOVIS | KHSO_{J}C_{O}(OA_{C})₂/ - | 25 | 60 minutes |
| 53 | BIOVIS | KHSO₅/Co(OAc)₂/ - | 50 | 8 minutes |
| 38 | FLOTROL | H₂O₂/FeSO₄PyCO | 35 | 50 minutes |
| 54 | FLOTROL | H₂O₂/FeSO₄PyCOOH | 25 | 75 minutes |
| 55 | FLOTROL | H₂O₂/FeSO₄PyCOOH | 50 | 6 minutes |

**Table 8. Effect of brine (summarizing table)**

| **Ex.** | **Substrate** | **Oxidazing agent/Catalyst/Binder** | **Brine** | **Degradation time** |
|---|---|---|---|---|
| 26 | BIOVIS | H₂O₂/FeSO₄PyCO | - - - | 20 minutes |
| 56 | BIOVIS | H₂O₂/FeSO₄PyCO | KCl 3% | 25 minutes |
| 57 | BIOVIS | H₂O₂/FeSO₄PyCOOH | CaCl₂ 25% | 25 minutes |
| 28 | BIOVIS | H₂O₂/FeSO₄PyCOOH | CaBr₂ 45% | > 24 hours |
| 59 | BIOVIS | H₂O₂/FeSO₄PyCOOH | HCOOK 20% | > 24 hours |

## Claims

1. A process for the removal of filtercakes from oil wells by solubilisation of polymeric material deposited on a porous medium, which comprises putting the above filtercakes in contact with an aqueous composition, the above aqueous composition comprising:
(a) a catalyst selected from:
(a1) a complex having general formula (I)
Fe⁺⁺(L)ₙ(Y)ₛ (I)
wherein n is an integer selected from 1 to 3,
Y is independently a group of an anionic nature bound to Fe⁺⁺ as anion in an ionic pair or with a covalent bond of the "σ" type;
"s" expresses the number of Y groups sufficient for neutralizing the formal oxidation charge of Fe⁺⁺, and is equal to 2 if all the Y groups are monovalent;
L being a binder selected from those having general formula (II) 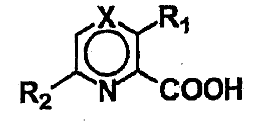 wherein X = CH, N;
R₁ and R₂, the same or different, are selected from -H, -COOH, and C₁-C₅ alkyl radicals, preferably from H and COOH;
(a2) a-hydrosoluble cobalt²⁺ salt;
(b) an oxidizing agent selected from:
(b1) hydrogen peroxide,
(b2) MHSO₅, wherein M is an alkaline metal; with the constraint that the catalyst (a1) can only be used in the presence of the oxidizing agent (b1) and the catalyst (a2) can only be used in the presence of the oxidizing agent (b2).

2. The process according to claim 1, wherein the binder L is pyridin-2-carboxylic acid.

3. The process according to claim 1, wherein the hydrosoluble cobalt²⁺ salt is cobalt acetate.

4. The process according to claim 1, wherein in (b2) M=K.

5. The process according to claim 1, wherein the hydrogen peroxide is used as an aqueous solution having a content of H₂O₂ ranging from 5% by weight to 40% by weight.

6. The process according to claim 5, wherein the hydrogen peroxide is used as an aqueous solution having a content of H₂O₂ ranging from 10% by weight to 30% by weight.

7. The process according to claim 1, wherein the aqueous composition has an Fe⁺⁺ concentration ranging from 0.5 to 10 millimoles/liter.

8. The process according to claim 7, wherein the aqueous composition has an Fe⁺⁺ concentration ranging from 1 to 5 millimoles/liter.

9. The process according to claim 1, wherein the aqueous composition has a hydrogen peroxide concentration ranging from 0.5 to 10 % by weight.

10. The process according to claim 9, wherein the aqueous composition has a hydrogen peroxide concentration ranging from 1 to 5 % by weight.

11. The process according to claim 1, wherein the complex having general formula (I) is formed "in situ" by the addition of the components, i.e. the ligand L and the iron (II) salt.

12. The process according to claim 11, wherein the molar ratio between the ligand and Fe⁺⁺ ranges from 1/1 to 30/1.

13. The process according to claim 12, wherein the molar ratio between the ligand and Fe⁺⁺ ranges from 1/1 to 10/1.

## Patentansprüche

1. Verfahren zur Entfernung von Filterkuchen aus Ölschächten durch Solubilisierung von Polymermaterial, welches auf einem porösen Medium abgeschieden ist, wobei das Verfahren das Inkontaktbringen der vorgenannten Filterkuchen mit einer wässrigen Zusammensetzung umfasst, wobei die vorgenannte wässrige Zusammensetzung enthält:
(a) einen Katalysator, der ausgewählt ist aus:
(a1) einem Komplex mit der allgemeinen Formel (I)
Fe⁺⁺(L)n(Y)s (I),
worin n eine ganze Zahl ausgewählt zwischen 1 und 3 ist,
Y, unabhängig voneinander, eine Gruppe mit einer anionischen Natur ist, welche an Fe⁺⁺ als Anion in einem Ionenpaar oder mit einer kovalenten Bindung des "σ"-Typ gebunden ist,
"s" die Anzahl von Y-Gruppen ausdrückt, welche zum Neutralisieren der formalen Oxidationsladung von Fe⁺⁺ ausreichend ist und gleich 2 beträgt, wenn alle Y-Gruppen monovalent sind,
L ein Linker ist, welcher aus solchen mit der allgemeinen Formel (II) ausgewählt ist: 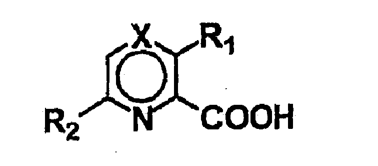 worin X = CH, N ist,
R₁ und R₂, gleich oder verschieden, aus -H, -COOH und C₁-C₅-Alkylradikalen, vorzugsweise aus H und COOH, ausgewählt sind,
(a2) einem wasserlöslichen Cobalt²⁺-Salz,
(b) ein Oxidationsmittel, das ausgewählt ist aus:
(b1) Wasserstoffperoxid,
(b2) MHSO₅, worin M ein Alkalimetall ist, mit der Maßgabe, dass der Katalysator (a1) nur in der Gegenwart des Oxidationsmittels (b1) eingesetzt werden kann und der Katalysator (a2) nur in der Gegenwart des Oxidierungsmittels (b2) eingesetzt werden kann.

2. Verfahren nach Anspruch 1, wobei der Linker L Pyridin-2-carbonsäure ist.

3. Verfahren nach Anspruch 1, wobei das wasserlösliche Cobalt²⁺-Salz Cobaltacetat ist.

4. Verfahren nach Anspruch 1, wobei in (b2) M = K ist.

5. Verfahren nach Anspruch 1, wobei das Wasserstoffperoxid als eine wässrige Lösung mit einem Gehalt von H₂O₂ in einem Bereich zwischen 5 Gew.-% und 40 Gew.-% eingesetzt wird.

6. Verfahren nach Anspruch 5, wobei das Wasserstoffperoxid als eine wässrige Lösung mit einem Gehalt von H₂O₂ in einem Bereich zwischen 10 Gew.-% und 30 Gew.-% eingesetzt wird.

7. Verfahren nach Anspruch 1, wobei die wässrige Zusammensetzung eine Fe⁺⁺-Konzentration in einem Bereich zwischen 0,5 und 10 Millimol/Liter aufweist.

8. Verfahren nach Anspruch 7, wobei die wässrige Zusammensetzung eine Fe⁺⁺-Konzentration in einem Bereich zwischen 1 und 5 Millimol/Liter aufweist.

9. Verfahren nach Anspruch 1, wobei die wässrige Zusammensetzung eine Wasserstoffperoxidkonzentration in einem Bereich zwischen 0,5 und 10 Gew.-% aufweist.

10. Verfahren nach Anspruch 9, wobei die wässrige Zusammensetzung eine Wasserstoffperoxidkonzentration in einem Bereich zwischen 1 und 5 Gew.-% aufweist.

11. Verfahren nach Anspruch 1, wobei der Komplex mit der allgemeinen Formel (I) "in situ" durch die Zugabe der Komponenten, d.h. des Liganden L und des Eisen (II)-Salzes, ausgebildet wird.

12. Verfahren nach Anspruch 11, wobei das molare Verhältnis zwischen dem Liganden und dem Fe⁺⁺ in einem Bereich zwischen 1/1 und 30/1 liegt.

13. Verfahren nach Anspruch 12, wobei das molare Verhältnis zwischen dem Liganden und dem Fe⁺⁺ in einem Bereich zwischen 1/1 und 10/ 1 liegt.

## Revendications

1. Procédé d'élimination de gâteaux de filtration de puits de pétrole par solubilisation de matériau polymère déposé sur un support poreux, qui comprend le fait de mettre lesdits gâteaux de filtration en contact avec une composition aqueuse, ladite composition aqueuse comprenant :
(a) un catalyseur choisi parmi :
(a1) un complexe de formule générale (I)
Fe⁺⁺ (L)ₙ(Y)ₛ (I)
dans laquelle n est un nombre entier choisi entre 1 et 3,
Y est indépendamment un groupe de nature anionique lié au Fe⁺⁺ en tant qu'anion dans une paire ionique ou avec une liaison covalente du type « σ » ;
« s » exprime le nombre de groupes Y suffisants pour neutraliser la charge d'oxydation formelle du Fe⁺⁺, et est égal à 2 si tous les groupes Y sont monovalents ;
L étant un liant choisi parmi ceux de formule générale (II) 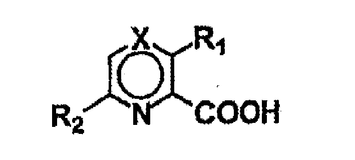 dans laquelle X = CH, N ;
R₁ et R₂, identiques ou différents, sont choisis parmi -H, -COOH, et des radicaux alkyle en C₁-C₅, de préférence parmi H et COOH ;
(a2) un sel de cobalt²⁺ hydrosoluble ;
(b) un agent d'oxydation choisi parmi :
(b1) le peroxyde d'hydrogène,
(b2) MHSO₅, M étant un métal alcalin ;
avec la contrainte selon laquelle le catalyseur (a1) ne peut être utilisé qu'en présence de l'agent d'oxydation (b1) et le catalyseur (a2) ne peut être utilisé qu'en présence de l'agent d'oxydation (b2).

2. Procédé selon la revendication 1, dans lequel le liant L est l'acide pyridine-2-carboxylique.

3. Procédé selon la revendication 1, dans lequel le sel de cobalt²⁺ hydrosoluble est l'acétate de cobalt.

4. Procédé selon la revendication 1, dans lequel dans (b2) M = K.

5. Procédé selon la revendication 1, dans lequel le peroxyde d'hydrogène est utilisé sous la forme d'une solution aqueuse ayant une teneur en H₂O₂ dans la plage de 5 % en poids à 40 % en poids.

6. Procédé selon la revendication 5, dans lequel le peroxyde d'hydrogène est utilisé sous la forme d'une solution aqueuse ayant une teneur en H₂O₂ dans la plage de 10 % en poids à 30 % en poids.

7. Procédé selon la revendication 1, dans lequel la composition aqueuse a une concentration en Fe⁺⁺ dans la plage de 0,5 à 10 millimoles/litres.

8. Procédé selon la revendication 7, dans lequel la composition aqueuse a une concentration en Fe⁺⁺ dans la plage de 1 à 5 millimoles/litres.

9. Procédé selon la revendication 1, dans lequel la composition aqueuse a une concentration en peroxyde d'hydrogène dans la plage de 0,5 à 10 % en poids.

10. Procédé selon la revendication 9, dans lequel la composition aqueuse a une concentration en peroxyde d'hydrogène dans la plage de 1 à 5 % en poids.

11. Procédé selon la revendication 1, dans lequel le complexe de formule générale (I) est formé « in situ » par l'addition des composants, en d'autres termes le ligand L et le sel de fer (II).

12. Procédé selon la revendication 11, dans lequel le rapport en moles entre le ligand et le Fe⁺⁺ se trouve dans la plage de 1/1 à 30/1.

13. Procédé selon la revendication 12, dans lequel le rapport en moles entre le ligand et le Fe⁺⁺ se trouve dans la plage de 1/1 à 10/1.
